Europäisches Patentamt

European Patent Office

Office européen des brevets

(19)

(11) **EP 0 707 428 B1**

(12) **FASCICULE DE BREVET EUROPEEN**

(45) Date de publication et mention
de la délivrance du brevet:
**16.01.2002 Bulletin 2002/03**

(51) Int Cl.⁷: **H04N 7/36**, H04N 7/46

(21) Numéro de dépôt: **95402264.6**

(22) Date de dépôt: **09.10.1995**

(54) **Procédé de codage différentiel de vecteurs mouvement avec une prédiction médiane**

Verfahren zur differentiellen Kodierung von Bewegungsvektoren mit Mittelwertprädiktion

Motion vector differential coding method with median prediction

(84) Etats contractants désignés:
**DE ES FR GB IT**

(30) Priorité: **10.10.1994 FR 9412083**

(43) Date de publication de la demande:
**17.04.1996 Bulletin 1996/16**

(73) Titulaire: **Wang, Pierre**
**92050 Paris La Défense (FR)**

(72) Inventeur: **Kerdranvat, Michel,**
**Thomson Multimedia**
**F-92050 Paris La Défense (FR)**

(74) Mandataire: **Zhang, Jianguo et al**
**THOMSON multimedia, 46 quai A. Le Gallo**
**92648 Boulogne Cédex (FR)**

(56) Documents cités:
**EP-A- 0 392 671** **EP-A- 0 415 491**
**EP-A- 0 466 981** **EP-A- 0 577 417**
**EP-A- 0 609 022**

- **ICASSP-92, vol. 3, 23 Mars 1992 SAN FRANCISCO, CA, US, pages 545-548, XP 000378989 P. HASKELL ET AL. 'Resynchronization of Motion Compensated Video affected by ATM Cell Loss'**

**Description**

La présente invention concerne un procédé de codage de vecteurs mouvement dans un système de compression d'images. L'invention s'applique notamment, mais non uniquement, au codage d'images vidéo pour des canaux de télécommunication à débit inférieur à 64 kbit/s.

L'invention concerne également un procédé de décodage, un dispositif de codage et un dispositif de décodage.

Un dispositif de compression d'images, ou codeur, est décrit par exemple dans la Recommandation H.261 du Comité Consultatif International Télégraphique et Téléphonique (CCITT), notamment en référence à la figure 3 ("Codeur de source") de ce document.

Le dispositif est basé sur un traîtement de l'image par blocs ou macro-blocs de pixels. Un bloc est composé d'une matrice de huit fois huit pixels, tandis qu'un macrobloc comprend quatre blocs. Un macro-bloc peut être codé suivant l'un des deux modes dits "inter" ou "intra", tous les blocs composant le macro-bloc étant codés suivant le même mode. Dans le cas du codage "intra", les blocs sont soumis à une transformation cosinus discrète, les coefficients ainsi obtenus étant quantifiés, puis codés suivant un procédé à code à longueur variable (codage "VLC"). Dans le cas du codage "inter", c'est la différence entre les blocs et des blocs de même position d'une image de référence qui est soumise à la transformation cosinus discrète.

Pour améliorer les performances du codage en mode "inter", des procédés de compensation de mouvement sont mis en oeuvre. Un procédé de ce type permet de déterminer, dans l'image de référence ou une fenêtre de celle-ci, un macro-bloc qui permettra un codage "inter" efficace du macro-bloc à coder de l'image courante. Divers critères de sélection existent pour déterminer un tel macro-bloc dans l'image de référence. La position relative du macro-bloc de référence par rapport à la position du macro-bloc à coder dans l'image courante est déterminée par ce que l'on appelle un vecteur mouvement ("Motion vector" en terminologie anglaise). Ce vecteur mouvement est transmis dans l'entête ("Header") du macro-bloc codé.

Un décodeur possède lui aussi une mémoire comportant l'image de référence. Connaissant le vecteur mouvement et les coefficients correspondant au macro-bloc codé, il pourra restituer les valeurs des pixels du macro-bloc d'origine. Ces valeurs peuvent comporter des erreurs, notamment une erreur de quantification.

Les vecteurs mouvement sont codés par différence par rapport à un vecteur prédiction. Ce vecteur est égal au vecteur mouvement du macro-bloc situé immédiatement à la gauche du macro-bloc à coder ou décoder. Les composantes horizontale H et verticale V d'un vecteur sont codées séparément. Selon un procédé connu, (voir, par example, le document EP-A-0 609 022) le vecteur prédiction est réinitialisé à (0,0) dans les deux cas suivants:

-    lorsque le macro-bloc immédiatement à gauche du macro-bloc à coder ou décoder a été codé en mode "intra",
-    lorsque le macro-bloc à coder est situé sur le bord gauche de l'image.

L'invention a pour objet un procédé de codage différentiel d'un vecteur mouvement associé à un macro-bloc caractérisé en ce qu'il comprend les étapes:

-    de détermination des composantes dudit vecteur mouvement,
-    de détermination d'un vecteur prédiction dont chaque composante est égale à la valeur médiane des composantes correspondantes d'au moins trois vecteurs mouvement candidats, un vecteur mouvement candidat étant un vecteur associé à un macro-bloc précédemment codé,
-    de soustraction des composantes ainsi obtenues aux composantes du vecteur à coder.

Selon un mode de réalisation particulier, les composantes d'un vecteur mouvement candidat sont considérées comme nulles pour la détermination du vecteur prédiction lorsque le macro-bloc dont le vecteur est à coder est situé en dehors de l'image.

Selon un mode de réalisation particulier, les composantes d'un vecteur mouvement candidat sont considérées comme nulles pour la détermination du vecteur prédiction lorsque le macro-bloc associé à ce vecteur mouvement candidat a été codé en mode "intra".

Selon un mode de réalisation particulier, les macro-blocs associés aux vecteurs mouvement candidats sont des macro-blocs adjacents au macro-bloc dont un vecteur est à coder.

Selon un mode de réalisation particulier, les macro-blocs associés aux vecteurs mouvement candidats font partie des macro-blocs situés au dessus ou à gauche du macro-bloc dont un vecteur est à coder.

Selon un mode de réalisation particulier, les macro-blocs associés aux vecteurs mouvement candidats comprennent le macro-bloc situé immédiatement à gauche, le macro-bloc situé immédiatement au dessus et le macro-bloc situé au dessus et à droite du macro-bloc dont un vecteur est à coder.

L'invention a aussi pour objet un procédé de décodage d'un vecteurs mouvement codé par codage différentiel caractérisé en ce qu'il comprend les étapes:

-    d'extraction, à partir des données reçues, des différences de composantes correspondant à ce vecteur,
-    de détermination d'un vecteur prédiction dont chaque composante est égale à la valeur médiane des composantes correspondantes de vecteurs associés à au moins trois macro-blocs précédemment décodés,

- d'addition desdites différences de composantes aux composantes du vecteur prédiction.

Selon un mode de réalisation particulier, les composantes d'un vecteur mouvement candidat sont considérées comme nulles pour la détermination du vecteur prédiction lorsque le macro-bloc dont le vecteur est à coder est situé en dehors de l'image.

Selon un mode de réalisation particulier, les composantes d'un vecteur mouvement candidat sont considérées comme nulles pour la détermination du vecteur prédiction lorsque le macro-bloc associé à ce vecteur mouvement candidat a été codé en mode "intra".

Selon un mode de réalisation particulier, les macro-blocs associés aux vecteurs mouvement candidats sont des macro-blocs adjacents au macro-bloc dont un vecteur est à décoder.

Selon un mode de réalisation particulier, les macro-blocs associés aux vecteurs mouvement candidats font partie des macro-blocs situés au dessus ou à gauche du macro-bloc dont un vecteur est à décoder.

Selon un mode de réalisation particulier, les macro-blocs associés aux vecteurs mouvement candidats comprennent le macro-bloc situé immédiatement à gauche, le macro-bloc situé immédiatement au dessus et le macro-bloc situé au dessus et à droite du macro-bloc dont un vecteur est à décoder.

L'invention a aussi pour objet un dispositif de compression d'images comportant un processeur d'estimation de mouvement produisant des vecteurs mouvement, caractérisé en ce que, lesdits vecteurs étant codés par rapport à un vecteur prédiction, ledit dispositif comprend:

- des moyens de détermination d'un vecteur prédiction dont chaque composante est égale à la valeur médiane des composantes correspondantes d'au moins trois vecteurs mouvement candidats, un vecteur mouvement candidat étant un vecteur associé à un macro-bloc précédemment codé,
- des moyens de soustraction des composantes ainsi obtenues aux composantes du vecteur à coder,
- des moyens de codage des valeurs obtenues par ladite soustraction.

L'invention a aussi pour objet un dispositif de décompression d'images compressées à l'aide d'un procédé de compensation de mouvement, caractérisé en ce qu'il comprend:

- un registre tampon recevant des données compressées,
- des moyens de démultiplexage reliés audit registre,
- des moyens de déquantification reliés aus moyens de démultiplexage,
- des moyens de transformation inverse de coefficients démultiplexés et déquantifiés,
- des moyens d'extraction de données concernant des vecteurs mouvement codés selon un codage différentiel par rapport à un vecteur prédiction,
- des moyens de détermination des composantes du vecteur prédiction à partir des valeurs médianes des composantes de vecteurs mouvement correspondant à des macro-blocs précédemment décodés,
- des moyens de calcul du vecteur mouvement associé à un macrobloc à partir des données concernant le vecteur mouvement et des composantes du vecteur prédiction.

Selon un mode de réalisation particulier, le dispositif de compression, respectivement de décompression est adapté à mettre en oeuvre le procédé de codage, respectivement de décodage.

L'invention sera mieux comprise à travers la description d'un exemple particulier préféré non limitatif, illustré par les figures parmi lesquelles:

- la figure 1 est un schéma fonctionnel d'un codeur d'images mettant en oeuvre l'invention,
- la figure 2 représente la numérotation des macro-blocs d'une image au format QFIC,
- la figure 3 illustre le traîtement de vecteurs candidats correspondant à des macro-blocs situés au delà des limites de l'image,
- la figure 4 est un schéma fonctionnel d'un décodeur mettant en oeuvre le procédé conforme à l'invention.

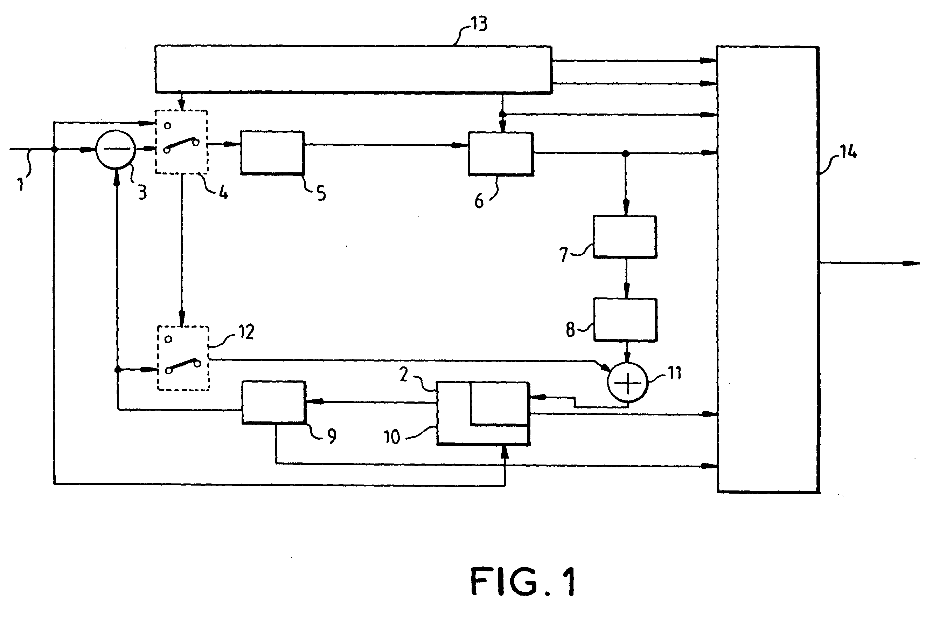

Un codeur d'images vidéo est représenté à la figure 1. Ce codeur comprend une entrée vidéo 1 alimentant un processeur de compensation de mouvement 10 (associé à une mémoire de référence 2), un soustracteur 3 et l'une des entrées d'un multiplexeur 4 à deux entrées. La seconde entrée du multiplexeur 4 est reliée à la sortie du soustracteur 3. La sortie du multiplexeur 4 est connectée à un processeur de transformation cosinus discrète (processeur DCT 5).

En mode "intra", le soustracteur est inutilisé. Les valeurs de pixels sont transmis directement de l'entrée 1 au processeur DCT 5.

En mode "inter", c'est la différence entre le signal à l'entrée du dispositif et une partie de l'image de référence mémorisée dans la mémoire 2, qui est transmise au processeur DCT 5.

La sortie du processeur DCT 5 est reliée à un circuit de quantification 6, dont la sortie est reliée d'une part à un circuit de déquantification 7 suivi d'un processeur DCT inverse 8, et d'autre part à un circuit de codage et de multiplexage 14. Le circuit de codage effectue notamment le codage VLC des différences de vecteurs mouvement, le codage VLC des coefficients de transformée DCT et l'assemblage des différentes données suivant la structure requise.

Un bloc à coder est soumis à la transformation DCT, qu'il s'agisse d'un bloc "inter" ou "intra", c'est à dire comportant respectivement des valeurs de pixels ou de différences de valeurs de pixels. Les coefficients DCT obtenus sont quantifiés, puis codés suivant un codage VLC. De tels codages VLC, ainsi que les procédés associés (sens de balayage des blocs, codage de couples de coefficients et de longueurs de suites de coefficients nuls) ne seront pas décrits de façon plus détaillée, étant bien connus de l'homme du métier. Les coefficients codés sont insérés dans le multiplex vidéo de façon appropriée.

Les coefficients quantifiés sont soumis à une déquantification, puis à une transformation DCT inverse. Il s'agit là du procédé auquel seront soumis ces mêmes données dans le décodeur, les valeurs de pixels résultantes comportant au moins en partie les mêmes erreurs, notamment les erreurs de quantification. Dans le codeur, ces données décodées servent à mettre à jour l'image de référence stockée dans la mémoire 2.

La sortie de la mémoire 2 est reliée à une entrée du soustracteur 3, éventuellement à travers un filtre spatial de boucle 9. La sortie du processeur DCT inverse 8 est reliée à la mémoire de référence 2 à travers un additionneur à deux entrées 11. La seconde entrée de l'additionneur 11 est reliée à la sortie d'un second multiplexeur 12 à deux entrées, dont l'une est connectée à la sortie du filtre de boucle 9, et dont l'autre n'est pas connectée, fournissant des valeurs de pixel nulles. En mode "intra", la sortie du multiplexeur 12 fournit les valeurs nulles. Les deux multiplexeurs 4 et 12 sont commandés simultanément par une unité de commande 13, qui gère également la quantification des coefficients, notamment en fonction du degré de remplissage du registre tampon vidéo (non-illustré).

Le processeur de compensation de mouvement compare des macro-blocs en provenance de l'entrée 1 à des macro-blocs de l'image de référence, et détermine d'une part si un macro-bloc doit être codé en mode intra ou inter. Une telle décision peut être prise en évaluant la valeur d'une fonction d'erreur comme la somme des carrés des différences de pixels en cas de mode "inter" par rapport à des valeurs seuil.

Le codage en mode "intra" est forcé de temps en temps s'il n'est pas choisi pendant un nombre donné d'images pour un même macro-bloc. Ceci est effectué pour limiter l'accumulation des erreurs de reconstruction dans la transformation DCT inverse. Par exemple, suivant la recommandation H.261 mentionnée précédemment, un tel forçage est effectué au moins toutes les 132 transmissions d'un même bloc.

La compensation ou l'estimation de mouvement est mise en oeuvre notamment au niveau du processeur 10. Il existe de nombreux procédés de recherche du meilleur vecteur mouvement et autant de variantes de celles ci: Comparaison exhaustive de blocs, procédés de comparaison hiérarchiques etc... Ces procédés peuvent être mis en oeuvre notamment par des microprocesseurs, des processeurs spécialisés...

Selon le présent exemple, la structure d'échantillonnage de la luminance d'une image est de 144 lignes de 176 pixels, ce qui correspond à un format de 11 fois 9 macroblocs. Pour la chrominance et pour chacune des composantes couleur, le format est de 72 lignes de 88 pixels. Ceci correspond à une structure luminance chrominance dite 4:1:1.

Ce format d'image est aussi appelé format QFIC (pour Quart de Format Intermédiaire Commun).

On supposera, dans cet exemple, qu'un tel format d'image est disponible à l'entrée 1 du codeur.

Par la suite, dans le but de simplifier les explications, il sera question uniquement de la luminance.

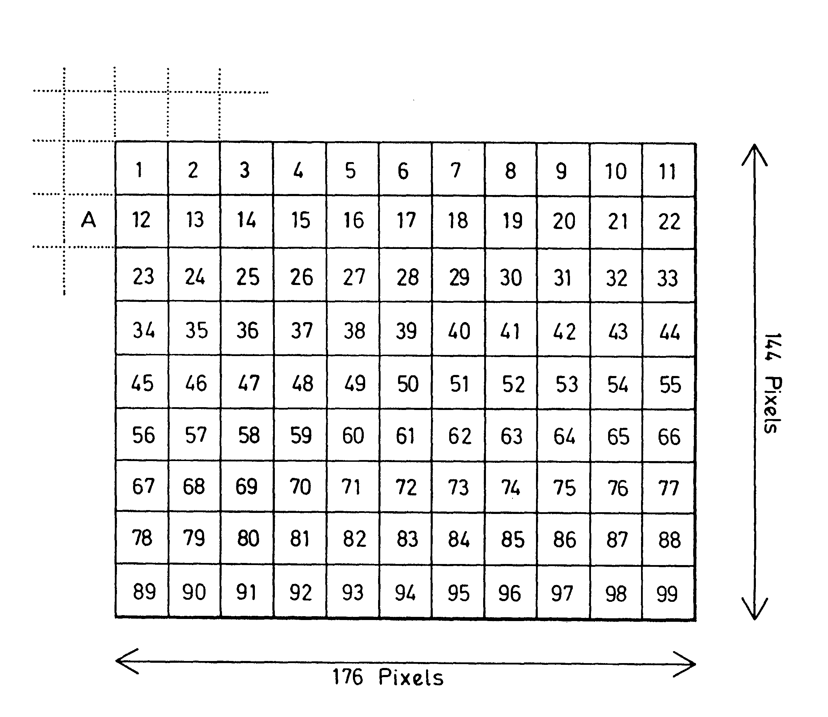

La figure 2 donne la numérotation des macroblocs de luminance. Les macro-blocs réels d'une image sont entourés de lignes continues. Par la suite, on désignera par macro-blocs adjacents d'un macro-bloc courant (c'est à dire actuellement traité) les huit macroblocs qui l'entourent. Les macro-blocs adjacents du macro-bloc 13 sont les macro-blocs 1, 2, 3, 12, 14, 23, 24 et 25. Encore dans le but de simplifier les explications, on supposera la présence de macro-blocs fictifs au delà de la limite de l'image. Le macro-bloc A est un macro-bloc adjacent des macro-blocs 1, 12 et 23.

Le processeur 10 fournit pour chaque macrobloc codé en mode "inter" un couple de composantes du vecteur mouvement associé à ce bloc. Suivant le présent exemple de réalisation, les composantes ont une précision d'un demi-pixel et sont limitées à l'intervalle [-16, +15.5].

Selon le présent exemple de réalisation, le circuit 14, qui comprend par exemple une mémoire et un microprocesseur programmé de façon adéquate, détermine pour chaque vecteur mouvement un vecteur prédiction. Les composantes $P_x$ et $P_y$ de ce vecteur prédiction sont soustraites aux composantes du vecteur mouvement à coder.

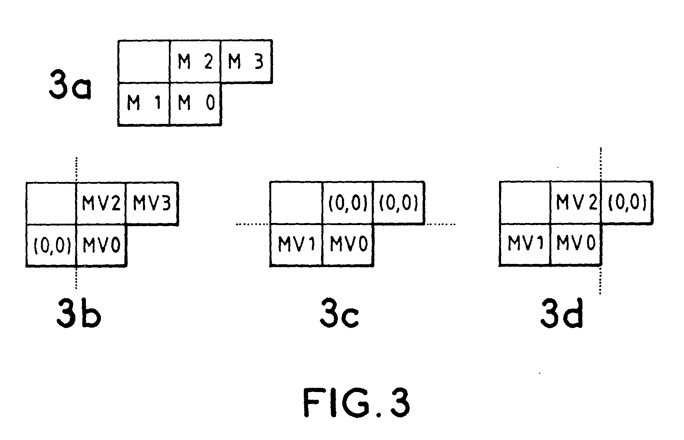

Selon le présent exemple de réalisation, les composantes du vecteur prédiction sont calculées d'une façon explicitée par la figure 3.

On désigne par M0 le macro-bloc courant, c'est à dire le macro-bloc pour lequel on détermine un vecteur prédiction. On désigne d'autre part respectivement par $MV_{ix}$ et $MV_{iy}$ la première et la seconde composantes du vecteur mouvement associé au macro-bloc i.

On désigne par M1 le macro-bloc immédiatement à gauche de M0, par M2 le macro-bloc immédiatement au dessus de M0, et par M3 le macro-bloc au dessus et à gauche de M0. Les vecteurs mouvement associés aux macro-blocs M1 à M3 sont appelés vecteurs candidats et sont désignés par MV1 à MV3. La figure 3a donne la disposition des macro-blocs M1 à M3 autour de M0.

Un vecteur mouvement n'étant défini que pour des macro-blocs codés en mode "inter", les composantes des vecteurs candidats sont supposés nuls dans les cas suivants:

- lorsqu'un macro-bloc a été codé en mode "intra",
- lorsqu'un macro-bloc se situe au-delà de la limite de l'image.

Les figures 3b, 3c et 3d illustrent différents cas. Les couples (0,0) indiquent les macro-blocs pour lesquels le vecteur-candidat est considéré comme nul. La ligne en pointillés indique les limites de l'image.

Une fois les composantes des trois vecteurs candidats déterminés, les composantes du vecteur prédiction sont calculées en choisissant pour chaque composante de ce vecteur la valeur médiane des composantes correspondantes des vecteurs candidats. Par exemple, si les vecteurs candidats sont respectivement:

$$MV1 = (-2;3), \ MV2 = (1;5), \ MV3 = (-1;7)$$

alors le vecteur prédiction sera (Px; Py)=(-1; 5).

On forme alors la différence entre ce vecteur prédiction et le vecteur mouvement MV0:

$$MVDx = MVx - Px$$

$$MVDy = MVy - Py$$

Ces différences sont ensuite codées par codage VLC et introduites dans le multiplex vidéo.

Etant donné que le calcul du vecteur prédiction exige la connaissance des vecteurs M1 à M3, ces vecteurs sont gardés en mémoire par le processeur 10.

Lors du décodage, un vecteur prédiction est déterminé de façon similaire. Bien sûr, on procédera à une addition des composantes de ce vecteur avec les différences décodées.

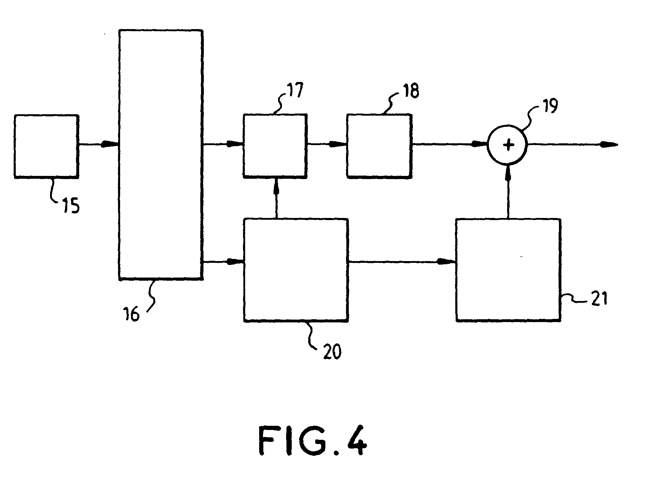

La figure 4 donne un schéma fonctionnel d'un décodeur. Les données reçues à partir d'un système de réception et de démodulation sont stockés dans un registre 15. Ce registre est nécessaire pour adapter la vitesse de transmission des données à leur utilisation effective. Les données sont démultiplexées par un démultiplexeur 16. Les coefficients sont décodés, subissent une quantification inverse (circuit 17), puis une transformation DCT inverse (circuit 18). Les blocs résultants sont ajoutés (par l'additionneur 19) au résultat de la prédiction dans le cas d'un codage en mode "inter". La mémoire de prédiction 21 est bien sûr mise à jour de façon appropriée.

Un processeur 20 se charge de commander la quantification et à décoder les données correspondant aux vecteurs mouvement. Il procède au décodage VLC des données, maintient en mémoire les vecteurs nécessaires au calcul du vecteur prédiction, effectue la détermination de ce vecteur puis ajoute à ses composantes les différences de composantes décodées. Les vecteurs mouvement ainsi rétablis sont utilisés de façon connue.

Selon une variante de réalisation, des vecteurs mouvement sont associés aux macro-blocs codés en mode "intra". Ceci permet de compenser des erreurs de transmission qui pourraient entâcher les coefficients codés de ce macro-bloc. Dans ce cas, les vecteurs candidats correspondants ne sont pas considérés comme étant nuls.

Il est bien évident que la présente invention ne se limite pas à l'exemple de réalisation décrit, mais s'applique dans d'autres systèmes de compression utilisant la compensation de mouvement.

**Revendications**

1. Procédé de codage différentiel d'un vecteur mouvement (MVO) associé à un macro-bloc (MO) **caractérisé en ce qu'**il comprend les étapes :

   - de détermination des composantes (MVOx, MVOy) dudit vecteur mouvement (MVO),
   - de détermination d'un vecteur prédiction dont chaque composante (Px, Py) est égale à la valeur médiane des composantes correspondantes d'au moins trois vecteurs mouvement candidats (MVI, MV2, MV3), un vecteur mouvement candidat étant un vecteur associé à un macro-bloc précédemment codé,
   - de soustraction des composantes ainsi obtenues aux composantes du vecteur à coder.

2. Procédé selon la revendication 1, **caractérisé en ce que** les composantes d'un vecteur mouvement candidat sont considérées comme nulles pour la détermination du vecteur prédiction lorsque le macro-bloc dont le vecteur est à coder est situé en bordure d'image.

3. Procédé selon l'une des revendications 1 ou 2, **caractérisé en ce que** les composantes d'un vecteur mouvement candidat sont considérées comme nulles pour la détermination du vecteur prédiction lorsque le macro-bloc associé à ce vecteur mouvement candidat a été codé en mode « « intra ».

4. Procédé selon l'une des revendications précédentes, **caractérisé en ce que** les macro-blocs associés aux vecteurs mouvement candidats sont des macro-blocs adjacents au macro-bloc dont un vecteur est à coder.

5. Procédé selon l'une des revendications précédentes, **caractérisé en ce que** les macro-blocs associés aux vecteurs mouvement candidats font partie des macro-blocs situés au dessus ou à gauche du macro-bloc dont un vecteur est à coder.

6. Procédé selon la revendication 15, **caractérisé en ce que** les macro-blocs associés aux vecteurs mouvement candidats comprennent le macro-bloc situé immédiatement à gauche, le macro-bloc situé immédiatement au dessus et le macro-bloc situé au dessus et à droite du macro-bloc dont un vecteur est à coder.

7. Procédé de décodage d'un vecteur mouvement (MVO) codé par codage différentiel de chaque composante **caractérisé en ce qu'**il comprend les étapes :

   - d'extraction, à partir des données reçues, des différences de composantes (MVDx, MVDy) correspondant au codage différentiel des composantes pour ce vecteur (MVO),
   - de détermination d'un vecteur prédiction dont chaque composante (Px, Py) est égale à la valeur médiane des composantes correspondantes de vecteurs associés à au moins trois macro-blocs précédemment décodés (MV1, MV2, MV3),
   - d'addition desdites différences de composantes (MVDx, MVDy) aux composantes (Px, Py) du vecteur prédiction.

8. Procédé selon la revendication 7, **caractérisé en ce que** les composantes d'un vecteur mouvement candidat sont considérées comme nulles pour la détermination du vecteur prédiction lorsque le macro-bloc dont le vecteur est à coder est situé en bordure d'image.

9. Procédé selon l'une des revendications 7 ou 8, **caractérisé en ce que** les composantes d'un vecteur mouvement candidat sont considérées comme nulles pour la détermination du vecteur prédiction lorsque le macro-bloc associé à ce vecteur mouvement candidat a été codé en mode « intra ».

10. Procédé selon l'une des revendications 7 à 9, **caractérisé en ce que** les macro-blocs associés aux vecteurs mouvement candidats sont des macro-blocs adjacents au macro-bloc dont un vecteur est à décoder.

11. Procédé selon l'une des revendications 7 à 10, **caractérisé en ce que** les macro-blocs associés aux vecteurs mouvement candidats font partie des macro-blocs situés au dessus ou à gauche du macro-bloc dont un vecteur est à décoder.

12. Procédé selon la revendication 11, **caractérisé en**

**ce que** les macro-blocs associés aux vecteurs mouvement candidats comprennent le macro-bloc situé immédiatement à gauche, le macro-bloc situé immédiatement au dessus et le macro-bloc situé au dessus et à droite du macro-bloc dont un vecteur est à décoder.

13. Dispositif de compression d'images comportant un processeur (10) d'estimation de mouvement produisant des vecteurs mouvement (MVO), **caractérisé en ce que**, lesdits vecteurs étant codés par rapport à un vecteur prédiction, ledit dispositif comprend :

   - des moyens (10) de détermination d'un vecteur prédiction dont chaque composante (Px, Py) est égale à la valeur médiane des composantes correspondantes d'au moins trois vecteurs mouvement candidats (MV1, MV2, MV3), un vecteur mouvement candidat étant un vecteur associé à un macro-bloc précédemment codé,
   - des moyens de soustraction (10) des composantes ainsi obtenues aux composantes du vecteur à coder,
   - des moyens de codage (14) des valeurs (MVDx, MVDy) obtenues par ladite soustraction.

14. Dispositif selon la revendication 13, **caractérisé en ce que** les moyens de détermination (10) sont adaptés pour mettre en oeuvre le procédé selon l'une des revendications 2 à 6.

15. Dispositif de décompression d'images compressées à l'aide d'un procédé de compensation de mouvement, **caractérisé en ce qu'**il comprend :

   - un registre tampon (15) recevant des données compressées,
   - des moyens de démultiplexage (16) reliés audit buffer (15),
   - des moyens de déquantification (17) reliés aux moyens de démultiplexage (16),
   - des moyens de transformation inverse (18) de coefficients démultiplexés et déquantifiés,
   - des moyens d'extraction (16) de données concernant un vecteur mouvement codé selon un codage différentiel par rapport à un vecteur prédiction,
   - des moyens de détermination (20) des composantes du vecteur prédiction à partir des valeurs médianes des composantes de vecteurs mouvement correspondant à des macro-blocs précédemment décodés,
   - des moyens de calcul du vecteur mouvement associé à un macrobloc à partir des données concernant le vecteur mouvement et des composantes du vecteur prédiction.

**16.** Dispositif selon la revendication 15, **caractérisé par** des moyens adaptés à mettre en oeuvre le procédé selon l'une des revendications 7 à 12.

**Patentansprüche**

**1.** Verfahren zur differentiellen Kodierung eines Bewegungsvektors (MVO), der einen Makroblock (MO) zugeordnet ist, **gekennzeichnet durch** folgende Schritte:

- Bestimmung der Komponenten (MVOx, MVOy) des Bewegungsvektors (MVO),
- Bestimmung eines Voraussagevektors, von dem jede Komponente (Px, Py) gleich dem Mittelwert der Komponenten ist, die wenigstens drei Kandidat-Bewegungsvektoren (MV1, MV2, MV3) entsprechen, wobei ein Kandidat-Bewegungsvektor ein Vektor ist, der einem vorher kodierten Makroblock zugeordnet ist,
- Subtrahieren der so gewonnenen Komponenten von den Komponenten des zu kodierenden Vektors.

**2.** Verfahren nach Anspruch 1, **dadurch gekennzeichnet, daß** die Komponenten eines Kandidat-Bewegungsvektors für die Bestimmung des Voraussagevektors als Nullen angesehen werden, wenn der Makroblock, dessen Vektor zu kodieren ist, an der Bildkante liegt.

**3.** Verfahren nach einem der Ansprüche 1 oder 2, **dadurch gekennzeichnet, daß** die Komponenten eines Kandidat-Bewegungsvektors für die Bestimmung des Voraussagevektors als Nullen angesehen werden, wenn der dem Kandidat-Bewegungsvektor zugeordnete Makroblock im Modus "intra" kodiert worden ist.

**4.** Verfahren nach einem der vorangehenden Ansprüche, **dadurch gekennzeichnet, daß** die den Kandidat-Bewegungsvektoren zugeordneten Makroblöcke Makroblöcke neben einem Makroblock sind, von dem ein Vektor zu kodieren ist.

**5.** Verfahren nach einem der vorangehenden Ansprüche, **dadurch gekennzeichnet, daß** die den Kandidat-Bewegungsvektoren zugeordneten Makroblöcke einen Teil der Makroblöcke bilden, die über oder links zu dem Makroblock liegen, von dem ein Vektor zu kodieren ist.

**6.** Verfahren nach Anspruch 1, **dadurch gekennzeichnet, daß** die den Kandidat-Bewegungsvektoren zugeordneten Makroblöcke den Makroblock, der unmittelbar links liegt, den unmittelbar darüber liegenden Makroblock und den Makroblock über und zur Rechten des Makroblocks enthalten, von dem ein Vektor zu kodieren ist.

**7.** Verfahren zur Dekodierung eines Bewegungsvektors (MVO), der durch eine differentielle Kodierung jeder Komponente kodiert ist, **gekennzeichnet durch** folgende Schritte:

- Extrahierung der Differenzen der Komponenten (MVDx, MVDy), die der differentiellen Kodierung der Komponenten für diesen Vektor (MVO) entsprechen, aus den empfangenen Daten,
- Bestimmung eines Voraussagevektors, von dem jede Komponente (Px, Py) gleich dem Mittelwert der entsprechenden Komponenten der Bewegungsvektoren ist, die wenigstens drei vorher dekodierten Makroblöcken (MV1, MV2, MV3) zugeordnet sind,
- Addition dieser Differenzen der Komponenten (MVDx, MVDy) zu den Komponenten (Px, Py) des Voraussagevektors.

**8.** Verfahren nach Anspruch 7, **dadurch gekennzeichnet, daß** die Komponenten eines Kandidat-Bewegungsvektors für die Bestimmung des Voraussagevektors als Nullen angesehen werden, wenn der Makroblock, dessen Vektor zu kodieren ist, an der Kante des Bildes liegt.

**9.** Verfahren nach einem der Ansprüche 7 oder 8, **dadurch gekennzeichnet, daß** die Komponenten eines Kandidat-Bewegungsvektors für die Bestimmung des Voraussagevektors als Nullen angesehen werden, wenn der diesem Kandidat-Bewegungsvektor zugeordnete Makroblock im Modus "intra" kodiert worden ist.

**10.** Verfahren nach einem der Ansprüche 7 bis 9, **dadurch gekennzeichnet, daß** die den Kandidat-Bewegungsvektoren zugeordneten Makroblöcke Makroblöcke neben einem Makroblock sind, von dem ein Vektor zu dekodieren ist.

**11.** Verfahren nach einem der Anspruche 7 bis 10, **dadurch gekennzeichnet, daß** die den Kandidat-Bewegungsvektoren zugeordneten Makroblöcke Teil der Makroblöcke bilden, die über oder links zu dem Makroblock liegen, von dem en Vektor zu dekodieren ist.

**12.** Verfahren nach Anspruch 11, **dadurch gekennzeichnet, daß** die den Kandidat-Bewegungsvektoren zugeordneten Makroblöcke den Makroblock, der unmittelbar links liegt, den Makroblock unmittelbar über und den Makroblock über und rechts zu dem Makroblock enthalten, von dem ein Vektor zu kodieren ist.

13. Vorrichtung zur Komprimierung von Bildern mit einem Prozessor (10) zur Bestimmung der die Bewegungsvektoren (MVO) erzeugenden Bewegung, **dadurch gekennzeichnet, daß** die Vektoren durch einen Voraussagevektor kodiert werden, mit folgenden Merkmalen:

- Mittel (10) zur Bestimmung eines Voraussagevektors, von dem jede Komponente (Px, Py) gleich dem Mittelwert der entsprechenden Komponenten von wenigstens drei Kandidat-Bewegungsvektoren (MV1, MV2, MV3) ist, wobei ein Kandidat-Bewegungsvektor ein einem vorher kodierten Makroblock entsprechender Makroblock ist,
- Mittel zur Subtraktion (10) der so gewonnenen Komponenten von den Komponenten des zu kodierenden Vektors,
- Mittel (14) zu Kodierung der durch die Subtraktion gewonnenen Werte (MVDx, MVDy).

14. Vorrichtung nach Anspruch 13, **dadurch gekennzeichnet, daß** die Mittel (10) zur Bestimmung zur Durchführung des Verfahrens nach einem der Ansprüche 2 bis 6 dienen.

15. Vorrichtung zur Dekomprimierung von komprimierten Bildern durch ein Verfahren zur Bewegungskompensation, **gekennzeichnet durch** folgende Merkmale:

- ein die komprimierten Daten empfangender Zwischenspeicher (15),
- mit dem Zwischenspeicher (15) verbundene Demultiplexing-Mittel (16),
- mit den Mitteln (16) zum Demultiplexing verbundene Mittel zur Dequantisierung (17),
- Mittel (18) zur inversen Transformation der demultiplexierten und dequantisierten Koeffizienten,
- Mittel (16) zur Extrahierung von Daten, die einen Bewegungsvektor betreffen, der entsprechend einer differentiellen Kodierung **durch** einen Voraussagevektor kodiert ist,
- Mittel (20) zur Bestimmung der Komponenten des Voraussagevektors aus Mittelwerten der Komponenten der Bewegungsvektoren, die den vorher dekodierten Makroblöcken entsprechen,
- Mittel zur Berechnung des einem Makroblock zugehörigen Bewegungsvektors aus den Daten, die den Bewegungsvektor und die Komponenten des Voraussagevektors betreffen.

16. Vorrichtung nach Anspruch 15, **gekennzeichnet durch** Mittel zum Durchführen des Verfahrens nach einem der Ansprüche 7 bis 12.

**Claims**

1. Process for the differential coding of a motion vector (MV0) associated with a macro-block (M0), **characterized in that** it comprises the steps:

- of determining the components (MV0x, MV0y) of the said motion vector (MV0),
- of determining a prediction vector, each component (Px, Py) of which is equal to the median value of the corresponding components of at least three candidate motion vectors (MV1, MV2, MV3), a candidate motion vector being a vector associated with a previously coded macro-block,
- of subtracting the components thus obtained from the components of the vector to be coded.

2. Process according to Claim 1, **characterized in that** the components of a candidate motion vector are regarded as being zero when determining the prediction vector if the macro-block whose vector is to be coded lies outside the image.

3. Process according to either of Claims 1 and 2, **characterized in that** the components of a candidate motion vector are regarded as being zero when determining the prediction vector if the macro-block associated with this candidate motion vector was coded in "intra" mode.

4. Process according to one of the preceding claims, **characterized in that** the macro-blocks associated with the candidate motion vectors are macro-blocks adjacent to the macro-block of which a vector is to be coded.

5. Process according to one of the preceding claims, **characterized in that** the macro-blocks associated with the candidate motion vectors form part of the macro-blocks lying above or to the left of the macro-block of which a vector is to be coded.

6. Process according to claim 5, **characterized in that** the macro-blocks associated with the candidate motion vectors comprise the macro-block lying immediately to the left, the macro-block lying immediately above and the macro-block lying above and to the right of the macro-block of which a vector is to be coded.

7. Process for the decoding of a motion vector (MV0) coded by differential coding, **characterized in that** it comprises the steps:

- of extracting, from the data received, the differences in components (MVDx, MVDy) corresponding to this vector (MV0),

- of determining a prediction vector, each component (Px, Py) of which is equal to the median value of the corresponding components of vectors associated with at least three previously decoded macro-blocks (MV1, MV2, MV3),
- of adding the said differences in components (MVDx, MVDy) to the components (Px, Py) of the prediction vector.

8. Process according to Claim 7, **characterized in that** the components of a candidate motion vector are regarded as being zero when determining the prediction vector if the macro-block whose vector is to be coded lies outside the image.

9. Process according to either of Claims 7 and 8, **characterized in that** the components of a candidate motion vector are regarded as being zero when determining the prediction vector if the macro-block associated with this candidate motion vector was coded in "intra" mode.

10. Process according to one of Claims 7 to 9, **characterized in that** the macro-blocks associated with the candidate motion vectors are macro-blocks adjacent to the macro-block of which a vector is to be decoded.

11. Process according to one of Claims 7 to 10, **characterized in that** the macro-blocks associated with the candidate motion vectors form part of the macro-blocks lying above or to the left of the macro-block of which a vector is to be decoded.

12. Process according to claim 11, **characterized in that** the macro-blocks associated with the candidate motion vectors comprise the macro-block lying immediately to the left, the macro-block lying immediately above and the macro-block lying above and to the right of the macro-block of which a vector is to be decoded.

13. Image compression device including a motion estimation processor (10) producing motion vectors (MV0), **characterized in that**, with the said vectors being coded with respect to a prediction vector, the said device comprises:

- means (10) for determining a prediction vector, each component (Px, Py) of which is equal to the median value of the corresponding components of at least three candidate motion vectors (MV1, MV2, MV3), a candidate motion vector being a vector associated with a previously coded macro-block,
- means (10) for subtracting the components thus obtained from the components of the vector to be coded,

- means (14) for coding the values (MVDx, MVDy) obtained through the said subtraction.

14. Device according to Claim 13, **characterized in that** it implements the process according to one of Claims 1 to 6.

15. Device for decompressing images compressed with the aid of a motion compensation process, **characterized in that** it comprises:

- a buffer register (15) receiving compressed data,
- demultiplexing means (16) connected to the said buffer (15),
- dequantization means (17) connected to the demultiplexing means (16),
- means (18) of inverse transformation of demultiplexed and dequantized coefficients,
- means (16) for extracting data relating to the motion vectors coded according to a differential coding with respect to a prediction vector,
- means (20) for determining the prediction vector on the basis of the motion vectors corresponding to previously decoded macro-blocks.

16. Device according to Claim 15, **characterized by** means adapted to implement the process according to one of Claims 7 to 12.

FIG. 1

EP 0 707 428 B1

|    |    |    |    |    |    |    |    |    |    |    |
|----|----|----|----|----|----|----|----|----|----|----|
| 1  | 2  | 3  | 4  | 5  | 6  | 7  | 8  | 9  | 10 | 11 |
| 12 | 13 | 14 | 15 | 16 | 17 | 18 | 19 | 20 | 21 | 22 |
| 23 | 24 | 25 | 26 | 27 | 28 | 29 | 30 | 31 | 32 | 33 |
| 34 | 35 | 36 | 37 | 38 | 39 | 40 | 41 | 42 | 43 | 44 |
| 45 | 46 | 47 | 48 | 49 | 50 | 51 | 52 | 53 | 54 | 55 |
| 56 | 57 | 58 | 59 | 60 | 61 | 62 | 63 | 64 | 65 | 66 |
| 67 | 68 | 69 | 70 | 71 | 72 | 73 | 74 | 75 | 76 | 77 |
| 78 | 79 | 80 | 81 | 82 | 83 | 84 | 85 | 86 | 87 | 88 |
| 89 | 90 | 91 | 92 | 93 | 94 | 95 | 96 | 97 | 98 | 99 |

A

144 Pixels

176 Pixels

**3a**

| | M 2 | M 3 |
|---|---|---|
| M 1 | M 0 | |

**3b**

| | MV2 | MV3 |
|---|---|---|
| (0,0) | MV0 | |

**3c**

| | (0,0) | (0,0) |
|---|---|---|
| MV1 | MV0 | |

**3d**

| | MV2 | (0,0) |
|---|---|---|
| MV1 | MV0 | |

# FIG. 3

FIG.4